# EUROPEAN PATENT SPECIFICATION

(11) **EP 2 140 607 B1**
(45) Date of publication and mention of the grant of the patent: **04.09.2013**
(21) Application number: 08714745.0
(22) Date of filing: 05.03.2008
(51) Int. Cl.: H04L 12/16, H04L 12/66, H04M 11/06, H04Q 3/64

(54) **SYSTEM AND METHOD FOR FACILITATING INTEGRATION AND MANAGEMENT OF SERVICE CAPABILITIES IN A NETWORK ENVIRONMENT**
SYSTEM UND VERFAHREN ZUR ERMÖGLICHUNG VON INTEGRATION UND VERWALTUNG VON DIENSTFÄHIGKEITEN IN EINER NETZWERKUMGEBUNG
SYSTÈME ET PROCÉDÉ POUR FACILITER L'INTÉGRATION ET LA GESTION DES CAPACITÉS DE SERVICE DANS UN ENVIRONNEMENT DE RÉSEAU

(30) Priority: 01.05.2007 US 927013 P
(43) Date of publication of application: 06.01.2010
(73) Proprietor: BlackBerry Limited, Waterloo ON N2L 3W8 (CA); Ascendent Telecommunications Inc., Sherman Oaks, CA 91403 (US)
(72) Inventor: BAKKER, Jan, Hendrik Lucas, Keller, Texas 76248 (US); ALFANO, Nicholas, P., Warwickshire CV37 7LG (GB); GEORGE, Richard, Waterloo, Ontario N2T 2S3 (CA); BUCKLEY, Adrian, Tracy, California 95376 (US); GISBY, Douglas, Atlanta, Georgia 30350 (US)
(74) Representative: Roberts, Gwilym Vaughan
(86) International application number: PCT/CA2008/000426
(87) International publication number: WO 2008/131512

(56) References cited:
- WO-A1-2004/102925
- WO-A1-2005/051019
- WO-A1-2005/051019
- WO-A1-2005/064958
- GB-A- 2 342 196
- US-A1- 2003 027 525
- US-A1- 2004 015 405
- US-A1- 2005 276 229
- US-A1- 2005 276 229
- US-A1- 2005 286 478
- US-A1- 2006 268 835

## Description

### FIELD OF THE DISCLOSURE

The present patent disclosure generally relates to communications networks. More particularly, and not by way of any limitation, the present patent disclosure is directed to a system and method for facilitating integration and management of service capabilities within a network environment.

### BACKGROUND

Multi-mode wireless handheld devices that can operate using multiple radio technologies to transmit voice calls as well as data traffic are becoming ubiquitous. Typically, such devices can register with multiple and different networks operated by different carriers and consume services from multiple and different service providers, including services offered by enterprises. Given the profusion of services and features available over multiple service platforms, a user may be able to avail itself of a number of service features that are common to the various platforms. For instance, a mobile subscriber of an enterprise may have a voice mail account with a wide area carrier network by virtue of his/her subscription in addition to a voice mail account with the employer/enterprise.

It is usually the case that where common services are offered via multiple platforms, they are configured differently. Moreover, it is not unlikely that these common services have different user interfaces and command sequences. Accordingly, in a heterogeneous network environment having disparate service platforms, the user experience with respect to consuming services is likely to be less than satisfactory.

GB 2342196 discloses a method and apparatus for perating a system of token-aware document services. The system includes a token-enabled server that is coupled to a network of file servers for storing the documents referenced by the document tokens, wherein each document token identifies a location of a document stored on the network. The token-enabled server receives, from a mobile computing device, a request for available document services that can be performed using document tokens, and transmits a hierarchically ordered list of available document services for display on a user interface of the mobile computing device.

US 2005/0276229 is concerned with providing a service discovery scheme that enables users of a network to receive information on the availability of services. The teachings of US 2005/0276229are alleged to be useful in allowing a user terminal equipment to locate, interrogate and invoke the enabler of one or more of the available services. In US 2005/0276229, a service discovery feature may be activated in response to the registration of a roaming user in a serving network in order to provide a list of services that can be offered to the registered user through the network. For instance, the serving network can be either the user's home network or the visited network. The services may be offered by the serving network either directly through its own service platform(s), via third party service platforms, or by a supporting network.

Aspects of the invention are detailed in the accompanying claims.

### BRIEF DESCRIPTION OF THE DRAWINGS

A more complete understanding of the embodiments of the present patent disclosure may be had by reference to the following Detailed Description when taken in conjunction with the accompanying drawings wherein:
FIG. 1 depicts an exemplary network environment including a service integration server node wherein an embodiment of the present patent disclosure may be practiced;
FIG. 2 depicts exemplary message flows within the network environment shown in FIG. 1 with respect to various call/session scenarios; FIG. 3 depicts a flowchart of the present patent disclosure for discovering service capabilities by a user equipment (UE) device according to one embodiment;
FIG. 4 depicts a flowchart of operations at a service integration server node according to an embodiment; FIGS. 5A and 5B depict exemplary high-level query and response structures with respect to facilitating discovery of service capabilities in a network environment according to one embodiment;
FIG. 6 depicts a flowchart of the present patent disclosure for discovering service capabilities by a UE device according to another embodiment;
FIG. 7 depicts a flowchart of operations at a service integration server node according to another embodiment;
FIGS. 8A and 8B depict exemplary high-level query and response structures with respect to facilitating discovery of service capabilities in a network environment according to another embodiment;
FIG. 9 depicts an arrangement for facilitating unified command interface according to one embodiment;
FIG. 10 depicts a block diagram of an embodiment of a communications device operable for purposes of the present patent disclosure; and
FIG. 11 depicts a block diagram of an embodiment of a service integration server node operable for purposes of the present patent disclosure.

### DETAILED DESCRIPTION OF THE DRAWINGS

The present patent disclosure is broadly directed to a scheme for facilitating discovery, integration and harmonization of various services available in a heterogeneous communications environment having disparate service platforms and architectures. In one aspect, disclosed herein is an embodiment of a method for facilitating discovery of service capabilities supported in a network environment. The claimed embodiment comprises one or more of the following features: generating a query towards a service integration node having functionality to integrate and/or harmonize service features from a plurality of service platforms; receiving a response from the service integration node, the response including a list of service capability identifiers relating to one or more service features; and presenting at least a subset of the services enabled by the discovered service capability identifiers via a display for supporting user interaction at a user equipment (UE) device.

In another aspect, disclosed herein is an embodiment of a UE device comprising one or more of the following features: means for generating a query towards a service integration and/or harmonization node (hereinafter referred to as service integration node) having functionality to integrate and/or harmonize service features from a plurality of service platforms; means for processing a response from the service integration node, the response including a list of service capability identifiers relating to one or more service features; and means for presenting at least a subset of the services enabled by the discovered service capability identifiers in order to facilitate user interaction with respect to the one or more service features.

In a still further aspect, disclosed herein is an embodiment of a service integration node operable to facilitate integration and/or harmonization of service capabilities with respect to a subscriber or user operating a UE device. The claimed embodiment comprises one or more of the following features: means for receiving a query from the UE device with respect to one or more service features from a plurality of service platforms; means for interfacing with the UE device and a capability profile database responsive to the query's contents; means for interfacing with the plurality of service platforms; means for corresponding the particular service platform responses with the device-supported set of responses (i.e., harmonizing); means for corresponding responses from disparate service platforms with a single set of device-supported responses (i.e., integrating); and means for generating a response towards the subscriberUE device, wherein the response includes a list of service capability identifiers in a discovery phase. There may be two sets of responses: one for interfacing during the discovery phase (the phase during which service capabilities are discovered) and one for passing on the integrated or harmonized results of the interaction of the UE with the service capabilities.

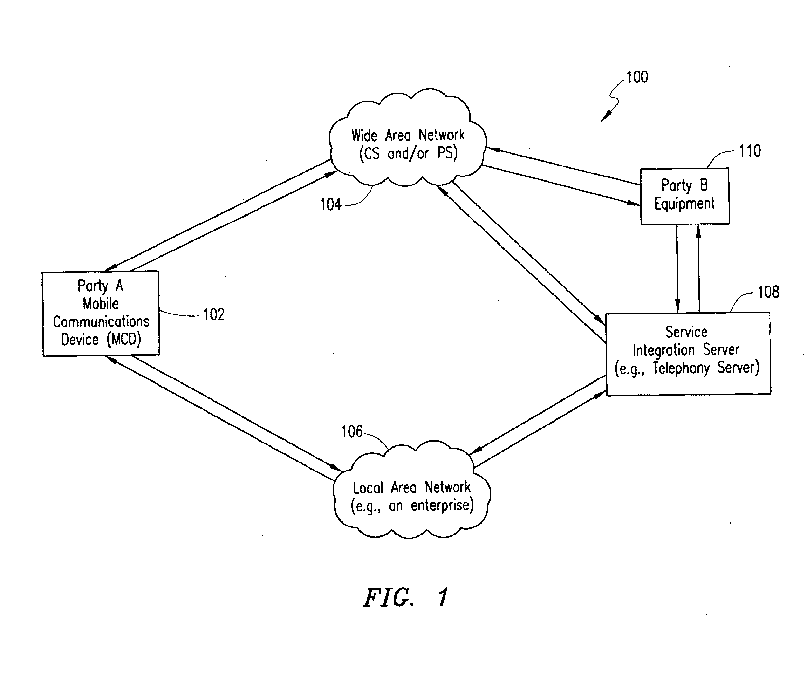

A system and method of the present patent disclosure will now be described with reference to various examples of how the embodiments can best be made and used. Like reference numerals are used throughout the description and several views of the drawings to indicate like or corresponding parts, wherein the various elements are not necessarily drawn to scale. Referring now to the drawings, and more particularly to FIG. 1, an exemplary network environment 100 is depicted therein which includes a service integration and/or harmonization server node 108 for facilitating discovery, integration and harmonization of services in accordance with one or more embodiments of the present patent disclosure. For purposes herein, the service integration and/or harmonization server node 108 may simply be referred to as "service integration server" and the term "integrate" may include integrate, harmonize, or both. Further, the network environment 100 is deemed to include two broad categories of networks with which a subscriber entity (e.g., Party A) having suitable communications equipment/device 102 may interact for consuming various services supported thereby. A wide area public communications network 104 is exemplary of a circuit-switched network, a packet-switched network, or any combination thereof that supports data and/or voice communications, and may include a public packet-switched network such as the Internet as well as any known or heretofore unknown carrier networks that offer a host of services (e.g., data, voice, video, multimedia, etc.) to be consumed by Party A 102. By way of example, the wide area public communications network 104 may be comprised of a General Packet Radio Service (GPRS) network that provides a packet radio access for mobile devices using the cellular infrastructure of a Global System for Mobile Communications (GSM)-based carrier network. In other implementations, the wide area public communications network 104 may comprise an Enhanced Data Rates for GSM Evolution (EDGE) network, an Integrated Digital Enhanced Network (IDEN), a Code Division Multiple Access (CDMA) network, a Universal Mobile Telecommunications System (UMTS) network, or any 3^{rd} Generation Partnership Project (3GPP)-compliant network (e.g., 3GPP or 3GPP2), all operating based on well known frequency bandwidths and protocols with respect to corresponding radio access technologies (RATs). Also, where access to public carrier networks is supported via applicable Wireless LAN (WLAN) technology, such local access technologies are also included. Thus, for purposes of the present disclosure, the access technologies may comprise RATs selected from IEEE 802.11a technology, IEEE 802.11b technology, IEEE 802.11g technology, IEEE 802.11n technology, GSM/EDGE Radio Access Network (GERAN) technology (both CS and PS domains), and UMTS technology, and Evolution - Data Optimized (EVDO) technology, and so on.

Additionally, Party A 102 may also communicate with local area data network 106 that is internal to an entity, such as, e.g., an enterprise network, that supports a set of services specific to the entity. For purposes herein, an enterprise network may be any communications network internal to a company, office, or organization, and may comprise wireline and/or wireless network infrastructure. Because of the versatility envisioned within the exemplary network environment 100, a UE device operable by Party A 102 may be any tethered or untethered communications device, and may include any personal computer (e.g., desktops, laptops, palmtops, or handheld computing devices) equipped with a suitable wireless modem or a mobile communications device (e.g., cellular phones or data-enabled handheld devices capable of receiving and sending messages, web browsing, et cetera), or any enhanced personal digital assistant (PDA) device or integrated information appliance capable of email, video mail, Internet access, corporate data access, messaging, calendaring and scheduling, information management, and the like. Further, the UE device may also capable of operating in multiple modes in that it can engage in both CS-based as well as PS-based communications, and can transition from one mode of communications to another mode of communications (i.e., by way of an inter-technology handoff) between both CS and PS domains without loss of continuity.

In accordance with the teachings set forth herein, the service integration server node 108 is provided for purposes of facilitating discovery, integration and harmonization of various services and service features available in the network environment 100 for consumption by a subscriber such as Party A 102. In one embodiment, the service integration node 108 may be provided as a network node associated within the local data network 106, e.g., as an enterprise network element. In another embodiment, the service integration node 108 may be provided as a network node associated within the wide area public telecommunications network 104. In a still further embodiment, the service integration node 108 may be provided as a network node associated within an Internet Protocol (IP) Multimedia Subsystem (IMS)-based core network with which various access networks interact. As a further implementation, the service integration node 108 may be provided as a network node associated within a third-party service provider network. Accordingly, as will be described in detail below, the service integration node 108 may be provided with a number interfaces to interact with various service platforms supported by the wide area public communications networks, local data networks, and/or third-party service platforms, depending on the implementation.

The exemplary network environment 100 further illustrates another party having suitable equipment, e.g., Party B 110, with which Party A 102 can engage in communication (e.g., a call or a multimedia session) that may invoke any number of applicable service features. By way of example, a number of telephony service features may be provided that may relate to an on-going CS call such as, e.g., direct inward calling service, call transfer service, auto attendant service, customized abbreviated dialing service, voice mail service, follow-me service, call forwarding service, music on hold service, automatic ring back service, automatic call distribution service, call waiting service, call pickup service, conference service, call accounting service, voice paging service, customized greeting service, shared message box service, call park service, and automated directory service. Those skilled in the art will recognize this list of services or features is only exemplary and there may be any number/type of services available from a variety of networks, including services that are local to the service integration server 108, that a subscribing party may consume depending on subscriber profiles and service policies. Furthermore, these services may be configured differently on different network, presumably with different user interfaces, as alluded to before.

A number of scenarios are possible in the exemplary network environment 100 with respect to a call or session between Party A 102 and Party B 110. For purposes of the present disclosure, the term "call" comprises any communication between the two Parties, including voice calls, data calls, multimedia/video sessions, etc. In one scenario, Party B 110 calls Party A directly without involvement of the service integration server 108. In this case, none of the capabilities associated with the service integration server 108 may be available to Party A. Accordingly, Party A will not be able to take advantage of any supplementary services or capabilities provided by the service integration server 108 that could support enhanced service experience with respect to the incoming call from Party B. For instance, Party A may not be able to use the "call park" service feature that allows Party A to put the call on hold at one UE device and continue the conversation from another UE device. In a second scenario, the service integration server 108 may exert some degree of call control although the incoming call from Party B is routed back through the wide area public communications network 104. Here, the call processing logic of the service integration server 108 may be implicated in the processing of the incoming and, accordingly, at least some of the service capabilities of the service integration server 108 may be available for use by Party A. In a third scenario, the incoming call from Party B bypasses the wide area public communications network 104 altogether. Rather, the service integration server 108 controls the call and routes it via the local area data network 106. Since the call is now anchored at the service integration server 108, all server capabilities are available for use by Party A.

Analogous to the incoming call scenarios set forth above, there can be corresponding outgoing call scenarios in the network environment 100 wherein the call is originated by Party A towards Party B. In one such scenario, Party A calls Party B directly without involvement of the service integration server 108. Clearly, none of the capabilities of the service integration server 108 will be available for use by Party A with respect to the outgoing call, e.g., not being able to use the "call park" feature as explained before. In another scenario, the service integration server 108 is involved in Party A's call to some degree even though the call is routed via the wide area public communications network 104. Accordingly, only limited service capabilities may be available to Party A. In yet another scenario, the outgoing call from Party A is routed through the local area data network 106 and anchored at the service integration server 108. As before, this condition allows all server capabilities to be used by Party A with respect to the outgoing call.

It will realized by those skilled in the art that in each of the scenarios where supplementary services are available, the service integration server 108 includes functionality operable to facilitate discovery of available capabilities and for increasing the uniformity of the presentation, configuration and operation of such capabilities in a heterogeneous network environment. It will further be realized that some network capabilities may be enabled depending on the routing of the call and some may be enabled regardless of the routing, e.g., based on subscription or configuration.

With respect to discovering available service/network capabilities, two scenarios emerge: (i) discovery of capabilities relative to or associated with a call ("in-call" discovery); and (ii) discovery of capabilities not related to an ongoing call ("out-of-call" discovery). Once the capabilities are discovered, appropriate modes of interaction may be provided to the subscriber. In a further variation, a uniform command interface may also be provided such that commands applicable to different service platforms may be harmonized for facilitating consistent and user-friendly service experience.

It should be realized that each of the foregoing aspects may be modulated based on applicable subscriber profiles, capability policies, and the like. In general, however, a subscriber is capable of generating a query towards the service integration server node 108 having the functionality to integrate service features from a plurality of service platforms. The subscriber thereafter receives a response from the service integration node, wherein the response includes a list of service capability identifiers relating to one or more service features. Appropriate presentation mechanisms available with the subscriber's UE device are operable to present at least a subset of the services enabled by the service capability identifiers via a display for supporting user interaction thereat.

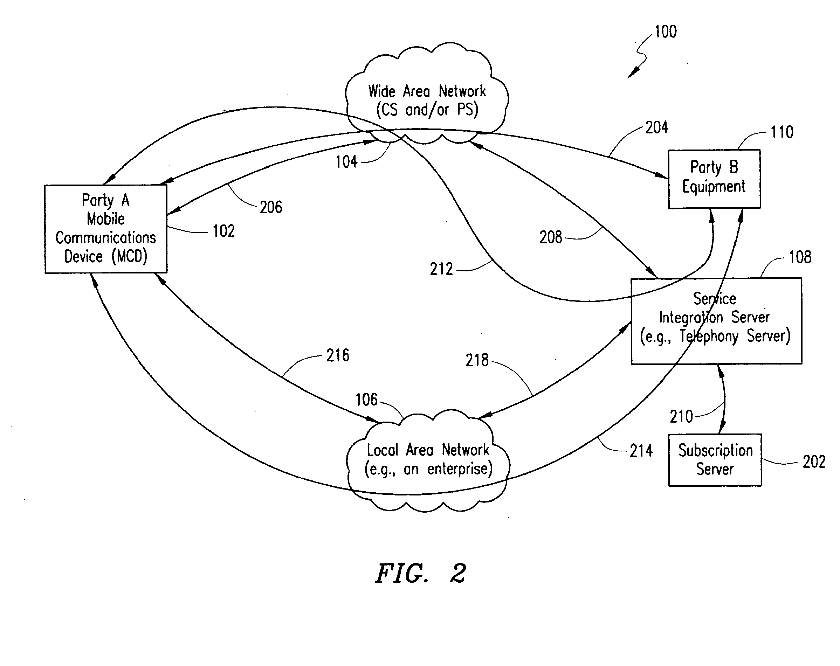

FIG. 2 depicts exemplary message flows within the network environment 100 with respect to the various call/session scenarios described hereinabove. By way of example, a subscription server 202 is operably coupled to the service integration server 108, although it may be disposed in the local area data network 106 or in the wide area public communications network 104. As set forth above, the available service/network capabilities depend on where the call is anchored or if the service integration server 108 has some control over the call. If the service integration server node 108 has no control over the call, whether incoming or outgoing, only the service capabilities offered by the carrier service providers are available. Reference numeral 204 refers to a flow path through the wide area public communications network 104 relating to such a scenario. On the other hand, in order for the subscriber UE 102 (i.e., associated with Party A) to determine if the service integration server 108 is part of the call processing chain, it may query the server 108 via flow paths 206 and 208 (exemplifying a communication path through the wide area public communications network 104) or via flow paths 216 and 218 (exemplifying a communication path through the local area data network 106). In a further variation, where the service integration server node 108 has somehow become a network node that is no longer digitally addressable by the subscriber equipment 102, appropriate mechanisms involving out-of-band control messaging schemes such as Short Message Service (SMS) messaging, Unstructured Supplementary Service Data (USSD) messaging, and User-to-User Signaling (UUS) may also be used for directing the query to the service integration node 108. Additional details regarding such mechanisms may be found in the following co-pending, commonly assigned U.S. patent applications: (i) "SYSTEM AND METHOD FOR ESTABLISHING RELIABLE DATA CONNECTIVITY WITH A NETWORK NODE BY A USER EQUIPMENT (UE) DEVICE" (Docket No. 31746-US-PAT), Application No.: 11/654,712, filed January 18, 2007, in the name(s) of Richard George, Brian Oliver, Jan John-Luc Bakker and Adrian Buckley; and (ii) "SYSTEM AND METHOD FOR EFFECTUATING REMOTE CONTROL OF A NETWORK NODE BY A USER EQUIPMENT (UE) DEVICE" (Docket No. 30745-US-PAT), Application No.: 11/654,713, filed January 18, 2007, in the name(s) of Richard George, Brian Oliver, Jan John-Luc Bakker and Adrian Buckley.

Upon receiving the query from Party A's UE 102, the service integration server 108 determines that the call is unknown (since there is no call control at the integration server) and constructs a response based on the service capabilities available on the service provider network. To determine these services, the service integration server 108 may interact with the subscription server 202 via a flow path 210. Accordingly, the response from the service integration server 108 will include only these service capabilities, which is transmitted back to the querying subscriber, i.e., Party A. Upon receipt of this information, service logic operating on the subscriber equipment informs the subscriber as to which capabilities are enabled and, optionally, which are not accessible.

It should be recognized that the query flow paths and the response flow paths need not follow the same routing. That is, for example, a query path may involve flow paths 206 and 208 whereas the response path corresponding thereto may involve flow paths 216 and 218. This decoupling of query and response paths may also apply where the service integration server 108 has some control over the call. If the data-enabled service integration server 108 receives a query from Party A 102 pursuant to a call with Party B, the message flow relating thereto is exemplified by flow paths 210 and 214 (signifying routing via the local area data network 106). Upon receipt of a query from Party A 102, the service integration server 106 is operable to construct a response that may be transmitted back to Party A 102 via flows 206 and 208 or via flows 216 and 218. The response message may include a set of service capabilities offered by the service integration server 108 as well as those offered as part of the public communications network subscription. Further, such service capabilities available as part of the subscription may be itemized as part of a subscriber profile that is stored in the enterprise, for example. Similar to the treatment described above, upon receipt of the response message, service logic executing on the subscriber equipment is operable to inform the subscriber as to which service capabilities are enabled and/or which are not. In similar fashion, where the service integration server 108 exerts some call control and the call is routed via the wide area public communications network 104, the message flow relating thereto may involve flow paths 210 and 212.

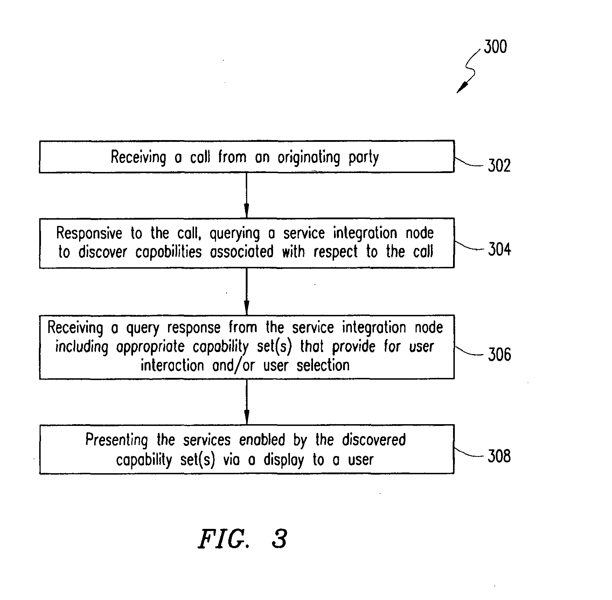

FIG. 3 depicts a flowchart associated with an embodiment 300 of the present patent disclosure for discovering service capabilities by a UE device relative to a call in accordance with the teachings set forth above. As illustrated, a call is received from an originating party by a subscriber (block 302). Responsive to the call, a network node, e.g., the service integration server 108, is queried to discover the capabilities with respect to the call (block 304). Upon receiving a query response from the service integration server node, which includes appropriate capability sets that provide for user interaction and/or user selection (block 306), the services enabled by the discovered capability set information are presented to the user via a suitable display mechanism (block 308).

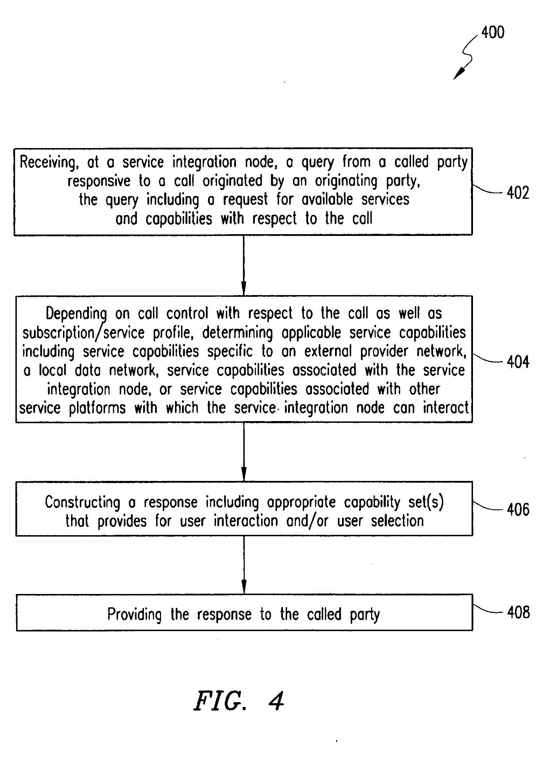

FIG. 4 depicts a flowchart of operations at a service integration server node according to an embodiment 400 with respect to facilitating discovery of service capabilities associated with a call. As described above, the service integration server node 108 receives a query from a called party (e.g., Party A 102) in response to a call from an originating party (e.g., Party B 110), wherein the query includes a request for available services and capabilities relative to the call (block 402). Depending on call control with respect to the call and applicable subscription service profiles, a set of service capabilities are determined by the service integration node 108 (block 404). In general, these service capabilities may include capabilities that are specific to an external provider network, a local data network, or other service platforms with which the service integration node can interact. An appropriate response is constructed that includes one or more service capability sets, which is transmitted to the called party for user interaction and/or selection (blocks 406 and 408).

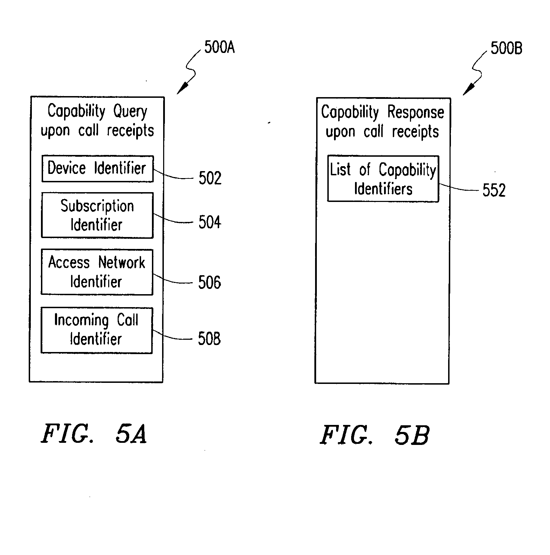

FIGS. 5A and 5B depict exemplary high-level query and response structures with respect to facilitating discovery of service capabilities in accordance with an embodiment.

Reference numeral 500A refers to a capability query generated by a subscriber (e.g., Party A 102) with respect to a call. As illustrated, the query 500A includes (i) a device identifier 502; (ii) a subscription identifier 504; (iii) an access network identifier 506; and (iv) an identifier 508 associated with the call. Reference numeral 500B refers to a response structure from a service integration node (e.g., a telephony server) which includes a list if capability identifiers 552. It will be recognized that although the exemplary query and response structures illustrated herein provide only a minimal amount of contents, additional pieces of information may also be included in other embodiments.

In one embodiment, the subscriber UE's device identifier may comprise its telephone number. Additionally or alternatively, some other unique indicia may also be used such as International Mobile Subscriber Identity (IMSI), Mobile Identification Number (MIN), Mobile Station International Subscriber Directory Number (MSISDN), Personal Identification Number (PIN), or some other Session Initiation Protocol (SIP)-based ID or a combination thereof. The receiving UE may query a node within the enterprise network independent of the access network used to deliver the incoming call, where the query may be transmitted over data networks such as IP (e.g., GPRS or WLAN) or via CS messaging (e.g., SMS or USSD). The server node in the enterprise handling the query may query other telephony platforms and/or external service integration nodes if any of the calls being processed by the server node are routed to the querying device. Details about all qualifying calls, associated capabilities as part of the subscription, roaming conditions, and the like may be returned via the response message. Depending on the configuration of the UE device, there may be capability information that is already provisioned thereat, which may facilitate a reduced list of capability identifiers to be transmitted between the UE device and the server node. If the UE device determines that the information returned does not correspond with the call that triggered the initial query, only default capabilities may be presented to the subscriber via suitable display interface.

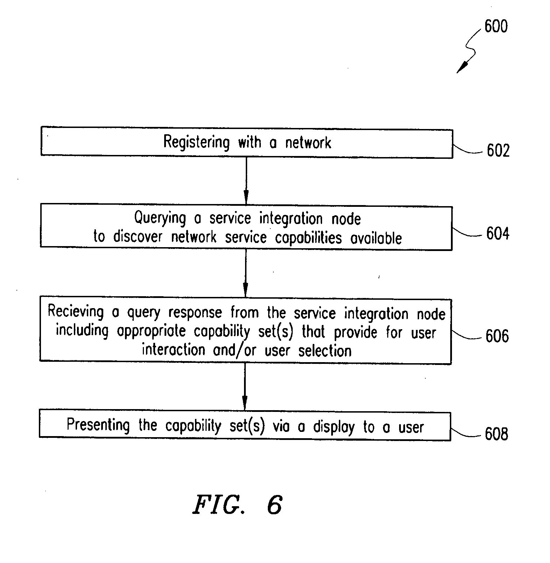

As alluded to previously, there may be some network service capabilities that are not necessarily associated with a call from an originating party. For example, a voice mail service may be enabled because of conditions such as subscription, configuration, the access network type, or the presence of a secure context, or any combination thereof. Discovery of such capabilities that are not associated with an ongoing call request involves a procedure initiated in conjunction with registration of the subscriber. FIG. 6 depicts a flowchart according to one embodiment 600 for discovering service capabilities by a UE device upon a registration or re-registration with a network. Upon registration or re-registration of the subscriber UE device with an access network (block 602), the logic executing on the device is operable to generate a query towards a network node such as the service integration server 108 in order to discover the available service capabilities (block 604). The contents of the query used for discovery of network service capabilities outside the context of a call will generally be somewhat different from the contents of a discovery query issued in the context of a call. However, the service integration server's response behavior is essentially similar in that a query response is constructed that includes one or more appropriate sets of capabilities. Accordingly, the subscriber UE device receives a suitable capability response including a list of capability identifiers that provide for user interaction and user selection (block 606), which may be presented via suitable display (block 608).

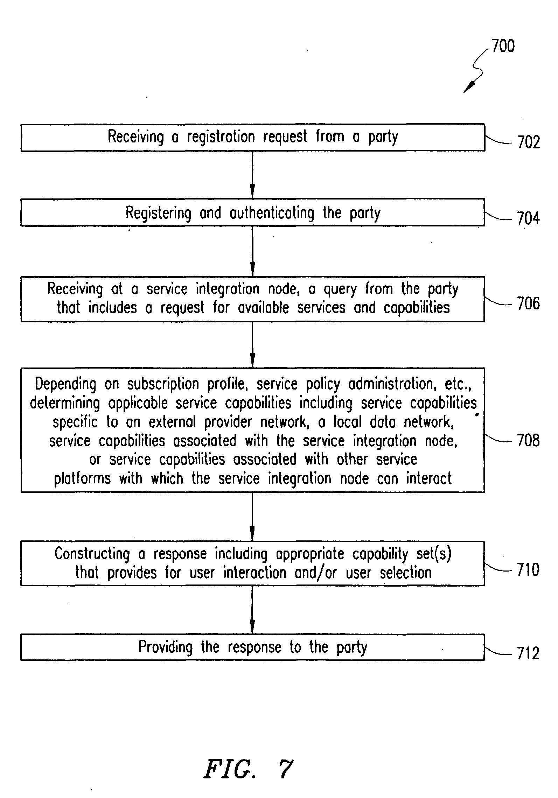

FIG. 7 depicts a flowchart of an embodiment 700 relating to operations on the network side that describe the behavior in response to a query generated outside the context of a call (i.e., out-of-call scenario). As illustrated in blocks 702 and 704, a subscriber UE device is registered and authenticated upon receiving a registration request therefrom. Depending on how the functionality of the service integration node is provisioned in the network environment, the discovery query may be part of the registration request itself or it may be a separate message. Regardless, applicable service capabilities are determined based on interrogation of applicable databases relating to subscription profile, configuration, access network type, etc. (block 708). A suitable response is constructed that includes the capability identifiers for transmission to the registering party (blocks 710 and 712). As alluded to before, the transmission paths of the query and response messages between the subscriber UE device and the service integration node may not necessarily have to be the same.

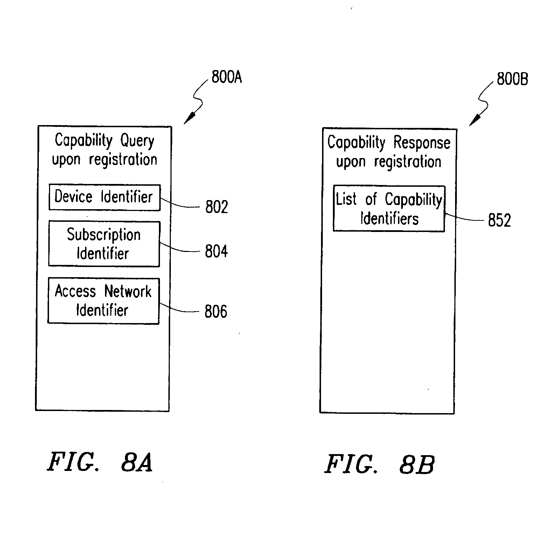

FIGS. 8A and 8B depict exemplary high-level query and response structures with respect to facilitating discovery of service capabilities in the out-of-call scenario described above. Similar to the data structures employed in the in-call discovery process, reference numeral 800A refers to a capability query generated by a subscriber (e.g., Party A 102) upon registration with a network. As illustrated, the query 800A includes (i) a device identifier 802; (ii) a subscription identifier 804; and (iii) an access network identifier 806. Reference numeral 800B refers to a response structure from a service integration node (e.g., a telephony server) which includes a list if capability identifiers 852. As before, the exemplary query and response structures provided herein illustrate only a minimal amount of contents and additional pieces of information may be included in other embodiments. Also, as before, the subscriber UE's device identifier may comprise its telephone number or some other unique indicia such as IMSI, MIN, MSISDN, PIN, or some other SIP-based ID or a combination thereof.

As can be appreciated, often the interface to a service capability differs depending on which enterprise or network element hosts it. For example, a service integration server by vendor A and a service integration server by vendor B are likely to have different configuration and user interfaces. The embodiments set forth herein aim to normalize and translate the user interfaces to enabled network element capabilities. As suggested earlier, there exist three cases in reference to the in-call scenario: (1) the call is not handled by the service integration server, (2) the call is handled by the service integration server but delivered over the wide area public communications network, or (3) the call is handled by the service integration server but delivered over the local area data network. To take account of the situation where multiple interfaces exist for the same capabilities on different service integration server components or to provide the subscriber with a "friendly" user interface that doesn't require memorizing of platform-specific sequences of digits, the UE's display may be used to invoke and control execution of these capabilities using unified commands. A server in the network can be used to distribute processing of the capabilities to the correct platform and map the control commands issues from the UE device into correct, platform-specific digit sequences.

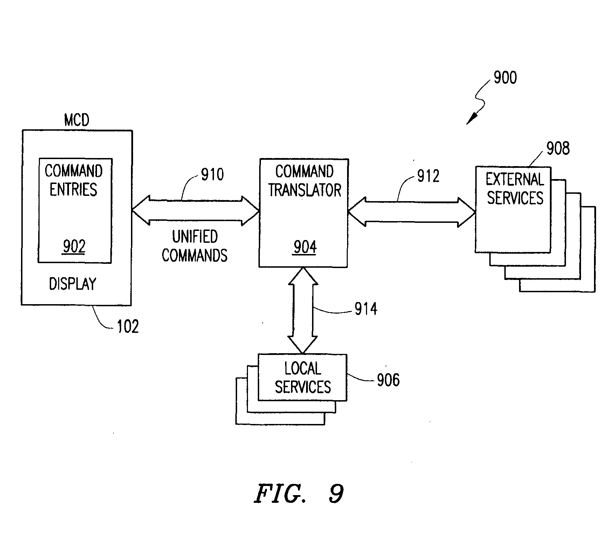

Referring to FIG. 9, depicted therein is an arrangement 900 for facilitating unified command interface according to one embodiment. A command translator 904 is operable in association with a subscriber UE device, e.g., UE 102, which may be provided as part of the device logic or in conjunction with a network node such as the service integration node 108. A display 902 is operable to present or accept command entries in a unified format. A unified command interface 910 provides the commands to the command translator 904 that translates the commands into platform-specific commands (e.g., digit sequences) that may be provided to local service platforms 906 or to external service platforms 908 (e.g., including the wide area public communications network platforms and third-party service provider platforms). Reference numerals 912 and 914 refer to platform-specific command interfaces with respect to the external platforms and local platforms, respectively. When platform-specific messages are provided by the respective service platforms to the command translator 904, a capability harmonization functionality located thereat provides a unified messaging scheme such that the subscriber's UE device 102 receives user-friendly messages for display.

One example that is rather ubiquitous is the integrated presentation and access to different voice mail services. For instance, there may be three different services involved: access and control of the subscription related voice mail in the wide area public communications network, access and control of the personal enterprise voice mail in the local area data network, and access and control of a group enterprise voice mail also in the enterprise.

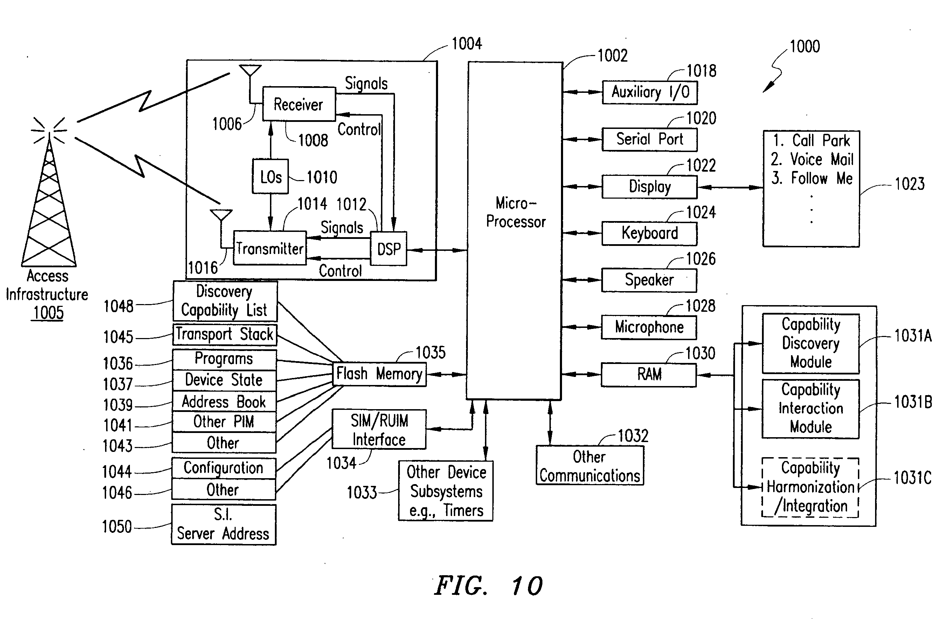

FIG. 10 depicts a block diagram of an embodiment of a communications device 1000 operable for purposes of the present patent disclosure. It will be recognized by those skilled in the art upon reference hereto that although an embodiment of the subscriber UE device 102 illustrated in FIG. 1 may comprise an arrangement similar to one shown in FIG. 10, there can be a number of variations and modifications, in hardware, software or firmware, with respect to the various modules depicted. Further, a UE device for purposes of the present disclosure may comprise a mobile equipment (ME) device without a removable storage module and/or a mobile device coupled with such a storage module. Accordingly, the arrangement of FIG. 10 should be taken as illustrative rather than limiting with respect to the embodiments of the present patent disclosure. A microprocessor 1002 providing for the overall control of UE 1000 is operably coupled to a communication subsystem 1004 that may preferably be capable of multi-mode communications (e.g., CS domain and PS domain). The communication subsystem 1004 generally includes one or more receivers 1008 and one or more transmitters 1014 as well as associated components such as one or more local oscillator (LO) modules 1010 and a processing module such as a digital signal processor (DSP) 1012. As will be apparent to those skilled in the field of communications, the particular design of the communication module 604 may be dependent upon the communications networks with which the mobile device is intended to operate (e.g., a CDMA network, a GSM network, WLAN, et cetera). Regardless of the particular design, however, signals received by antenna 1006 through appropriate access infrastructure 1005 (e.g., cellular base station towers, WLAN hot spots, etc.) are provided to receiver 1008, which may perform such common receiver functions as signal amplification, frequency down conversion, filtering, channel selection, analog-to-digital (A/D) conversion, and the like. Similarly, signals to be transmitted are processed, including modulation and encoding, for example, by DSP 1012, and provided to transmitter 1014 for digital-to-analog (D/A) conversion, frequency up conversion, filtering, amplification and transmission over the air-radio interface via antenna 1016.

Microprocessor 1002 may also interface with further device subsystems such as auxiliary input/output (I/O) 1018, serial port 1020, display 1022, keyboard/keypad 1024, speaker 1026, microphone 1028, random access memory (RAM) 1030, a short-range communications subsystem 1032, and any other device subsystems, e.g., timer mechanisms, generally labeled as reference numeral 1033. To control access, a USIM/RUIM interface 1034 may also be provided in communication with the microprocessor 1002. In one implementation, USIM/RUIM interface 1034 is operable with a USIM/RUIM card having a number of key configurations 1044 and other information 1046 such as identification and subscriber-related data, as well as the list(s) of discovered or provisioned capability sets and service integration node destination address information, which will be described in additional detail below.

Operating system software and applicable service logic software may be embodied in a persistent storage module (i.e., non-volatile storage) such as Flash memory 1035. In one implementation, Flash memory 1035 may be segregated into different areas, e.g., storage area for computer programs 1036 (e.g., service processing logic), as well as data storage regions such as device state 1037, address book 1039, other personal information manager (PIM) data 1041, and other data storage areas generally labeled as reference numeral 1043. A transport stack 1045 may be provided to effectuate one or more appropriate radio-packet transport protocols. A storage area 1048 is operable to store one or more lists of network capability sets discovered as set forth above. A capability discovery module 1031A, a capability interaction module 1031B, and an optional capability harmonization/integration module 1031C may be loaded into RAM 1030 for executing the various processes described hereinabove. As noted previously, the functionality of the capability harmonization/integration module may also be provided within the service integration node 108, either additionally or alternatively.

In order to interact with and discover capabilities available, either in-call or out-of-call, an address of a service integration node needs to be provisioned for UE 1000. Since there may be a plurality of service integration nodes with which UE 1000 may interact, a corresponding number of addresses 1050 may be stored in a memory circuit integrated within UE 1000 such as, e.g., Flash Memory 1035. Additionally or alternatively, the address information may be stored in a removable module such as one of a Universal Subscriber Identity Module (USIM), a Removable User Identity Module (RUIM), a Compact Flash module, Secure Digital (SD) memory card, MicroSD, Memory Stick, and the like. The address information may comprise at least one of a Fully Qualified Domain Name (FQDN), an IP address, an E.164 number, and SIP Uniform Resource Identifier (URI). Additionally, a SIP URI can be a Public Service Identity (PSI) or a wildcard PSI. With respect to provisioning the address information for the UE device 1000, a number of mechanisms may be employed such as, e.g., SMS, USSD, or IP addressing, and the like, in addition to or in conjunction with known Open Mobile Alliance (OMA) Device Management (DM) techniques or other proprietary mechanisms.

Set forth below are a number of examples that illustrate the various address storage formats that may be utilized in accordance with the teachings herein. Table I is exemplary of an E.164 number address stored in a removable module (e.g., a (U)SIM):

**Table I**

| Identifier: xxx | | | Structure: linear fixed | | | Optional |
|---|---|---|---|---|---|---|
| Record length: 12 bytes | | | | Update activity: low | | |
| Access Conditions: | | | | | | |
| | READ | | PIN | | | |
| | UPDATE | | PIN/ADM | | | |
| | | | (fixed during administrative management) | | | |
| | DEACTIVATE | | ADM | | | |
| | ACTIVATE | | ADM | | | |

| Bytes | | Description | | | M/O | Length |
|---|---|---|---|---|---|---|
| 1 | | Length of BCD number/SSC contents | | | M | 1 byte |
| 2 | | TON and NPI | | | M | 1 byte |
| 3 to 12 | | E.164 digits | | | M | 10 bytes |

Table II depicts an exemplary coding structure for an E.164 address:

**Table II**

| 8 | 7 | 6 | 5 | 4 | 3 | 2 | 1 | |
|---|---|---|---|---|---|---|---|---|
| Length of called party BCD number contents | | | | | | | | octet 1 |
| 1 ext | type of number | | | Numbering plan identification | | | | octet 2 |
| Number digit 2 | | | | Number digit 1 | | | | octet 3* |
| Number digit 4 | | | | Number digit 3 | | | | octet 4* |
| | | | | | | | | : |
| etc | | | | | | | | : |

Table III depicts an exemplary coding structure for an address according to another embodiment:

**Table III**

| Type of number (octet 3) (Note 1) | | | |
|---|---|---|---|
| Bits | | | |
| 7 | 6 | 5 | |
| 0 | 0 | 0 | unknown (Note 2) |
| 0 | 0 | 1 | international number (Note 3, Note 5) |
| 0 | 1 | 0 | national number (Note 3) |
| 0 | 1 | 1 | network specific number (Note 4) |
| 1 | 0 | 0 | dedicated access, short code |
| 1 | 0 | 1 | reserved |
| 1 | 1 | 0 | reserved |
| 1 | 1 | 1 | reserved for extension |

Table IV depicts an exemplary numbering plan identification scheme according to one embodiment:

**Table IV**

| Numbering plan identification (octet 3) | | | | |
|---|---|---|---|---|
| Number plan (applies for type of number = 000, 001, 010 and 100) | | | | |
| Bits | | | | |
| 4 | 3 | 2 | 1 | |
| 0 | 0 | 0 | 0 | unknown |
| 0 | 0 | 0 | 1 | ISDN/telephony numbering plan (Rec. E.164/E.163) |
| 0 | 0 | 1 | 1 | data numbering plan (Recommendation X.121) |
| 0 | 1 | 0 | 0 | telex numbering plan (Recommendation F.69) |
| 1 | 0 | 0 | 0 | national numbering plan |
| 1 | 0 | 0 | 1 | private numbering plan |
| 1 | 1 | 1 | 1 | reserved for extension |
| All other values are reserved. | | | | |

Set for the below is an exemplary scheme for provisioning an E.164 address of an enterprise telephony server via OMA DM mechanism:
/<X>/EnterpriseTelephonyServer/
   - Occurrence: One
   - Format: chr
   - Access Types: Get, Replace
   - Values: < A EnterpriseTelephonyServer >
{The format of the EnterpriseTelephonyServer is defined ITU-T E.164}
EXAMPLE: +12125555555

```
   <Node>
     <NodeName> EnterpriseTelephonyServer </NodeName>
     <!--The EnterpriseTelephonyServer node starts here.->
     <DFProperties>
       <AccessType>
         <Get/>
         <Replace/>
       </AccessType>
       <DFFormat>
         <chr/>
       </DFFormat>
       <Occurrence>
         <One/>
       </Occurrence>
       <DFTitle>The EnterpriseTelephonyServer Number
       </DFTitle>
       <DFType>
         <DDFName/>
       </DFType>
     </DFProperties>
   </Node>
```

Table V is exemplary of a SIP URI address stored in a removable module (e.g., a (U)SIM):

**Table V**

| Identifier: 'xxx' | | | Structure: linear fixed | | | Mandatory |
|---|---|---|---|---|---|---|
| SFI: '04' | | | | | | |
| Record length: X bytes | | | | Update activity: low | | |

| Access Conditions: | | | | | | |
|---|---|---|---|---|---|---|
| | READ | | PIN | | | |
| | UPDATE | | ADM | | | |
| | DEACTIVATE | | ADM | | | |
| | ACTIVATE | | ADM | | | |

| Bytes | | Description | | | M/O | Length |
|---|---|---|---|---|---|---|
| 1 to X | | URI TLV data object | | | M | X bytes |

Set for the below is an exemplary scheme for provisioning a SIP URI address of an enterprise telephony server via OMA DM mechanism:
/<X>/ EnterpriseTelephonyServer /
   - Occurrence: One
   - Format: chr
   - Access Types: Get, Replace
   - Values: < A EnterpriseTelephonyServer >
{The format of the EnterpriseTelephonyServer is defined by 3GPP TS 23.003.)
EXAMPLE: sip:domain.xfer@dtf1.home1.net

```
   <Node>
     <NodeName> EnterpriseTelephonyServer </NodeName>
     <!-The EnterpriseTelephonyServer node starts here. ->
     <DFProperties>
       <AccessType>
         <Get/>
         <Replace/>
       </AccessType>
       <DFFormat>
         <chr/>
       </DFFormat>
       <Occurrence>
         <One/>
       </Occurrence>
       <DFTitle>The EnterpriseTelephonyServer URI.
       </DFTitle>
       <DFType>
         <DDFName/>
       </DFType>
     </DFProperties>
   </Node>
```

Set for the below is an exemplary scheme for provisioning an IP address of an enterprise telephony server via OMA DM mechanism:
/<X>/EnterpriseTelephonyServer
   - Occurrence: ZeroOrOne
   - Format: chr
   - Access Types: Get, Replace
   - Values: < IPv4 address>

```
   <Node>
     <NodeName> EnterpriseTelephonyServer </NodeName>
     <DFProperties>
       <AccessType>
         <Get/>
         <Replace/>
       </AccessType>
       <DFFormat>
         <chr/>
       </DFFormat>
       <Occurrence>
         <ZeroOrOne/>
       </Occurrence>
       <Scope>
         <Dynamic/>
       </Scope>
       <DFTitle>EnterpriseTelephonyServer.</DFTitle>
       <DFType>
         <MIME>text/plain</MIME>
       </DFType>
     </DFProperties>
   </Node>
```

Set for the below is an exemplary scheme for provisioning an FQDN address of an enterprise telephony server via OMA DM mechanism:
/<X>/EnterpriseTelephonyServer
   - Occurrence: ZeroOrOne
   - Format: chr
   - Access Types: Get, Replace
   - Values: <A fully qualified domain name>
{The FQDN, or host name as defined by RFC 1123, is represented as character-labels with dots as delimiters.} EXAMPLE: pcscf.operator.com

```
   <Node>
     <NodeName>EnterpriseTelephonyServer </NodeName>
     <DFProperties>
       <AccessType>
         <Get/>
         <Replace/>
       </AccessType>
       <DFFormat>
         <chr/>
       </DFFormat>
       <Occurrence>
         <ZeroOrOne/>
       </Occurrence>
       <Scope>
         <Dynamic/>
       </Scope>
       <DFTitle EnterpriseTelephonyServer.</DFTitle>
       <DFType>
         <MIME>text/plain</MIME>
       </DFType>
     </DFProperties>
   </Node>
```

Still continuing to refer to FIG. 10, display 1022 of the UE device 1000 is operable to show the service capabilities 1023 that can be invoked, unavailable services, etc., the display presentation being in accordance with the look and feel of the device. A list of capabilities may be maintained in memory, which is populated by the capability discovery module 1031A. In some implementations, at least some initial capabilities may be retrieved from Flash Memory 1035 (e.g., capability list 1048) or from the removable module (e.g., (U)SIM, Memory Card, and the like). In a further variation, the display mechanism of the UE device 1000 may also list the capabilities that cannot be invoked by the device.

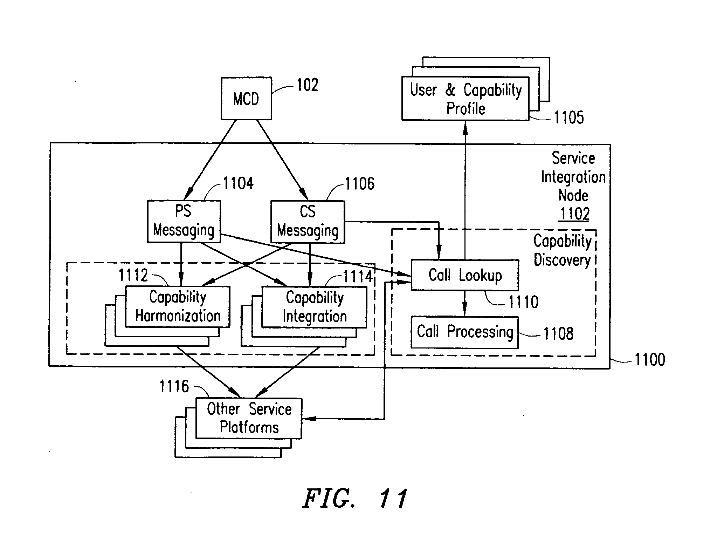

FIG. 11 depicts a block diagram of an embodiment of a service integration server node 1105 operable for purposes of the present patent disclosure. As with the UE device 1000, it will be recognized that although an embodiment of the service integration server node 108 illustrated in FIG. 1 may comprise an arrangement similar to one shown in FIG. 11, there can be a number of variations and modifications, in hardware, software or firmware, with respect to the various modules depicted. Regardless, depending on available access networks and subscriber/operator policies or user preferences, the subscriber UE device 102 is capable of using CS and/or PS messaging to interact with the functionality of the service integration node 1100. Accordingly, the service integration node 1100 is provided with both PS messaging interfaces 1104 and CS messaging interfaces 1106. The exemplary service integration server node 1100 supports capability discovery using its call processing component 1108 and/or by querying the user and capability profiles 1105 via a call lookup module 1110. As illustrated, both or either of the CS and PS messaging interfaces are operable to interact with the call lookup module 1110 depending on the type of the query received. Capability harmonization modules 1112 and capability integration modules 1114 are provided for supporting the various features described in detail hereinabove. The harmonization/integration functionality of the service integration node 1100 is also operable to either distribute the capability execution to one or more external service platforms 1116 or execute the capability locally.

It is believed that the operation and construction of the embodiments of the present patent application will be apparent from the Detailed Description set forth above. Furthermore, it should be appreciated that the various operations set forth herein and elsewhere in the patent application may be accomplished via a number of means, including software (e.g., program code), firmware, hardware, or in any combination, usually in association with a processing system. Where the processes are embodied in software, such software may comprise program instructions that form a computer program product, uploadable service application software, or software downloadable from a remote station, and the like. While the exemplary embodiments shown and described may have been characterized as being preferred, it should be readily understood that various changes and modifications could be made therein without departing from the scope of the present disclosure as set forth in the following claims.

## Claims

1. A method for facilitating discovery of service capabilities available in a network environment (100), comprising:
at a wireless user equipment (UE) device (1000), generating a query (304) towards a service integration node (108) disposed in an Internet Protocol (IP) Multimedia Subsystem (IMS) core network and having functionality to integrate service features from a plurality of service platforms, said query being in-call with respect to an incoming call from a calling party (110) and pertaining to available service features for the incoming call;
receiving a response (306) at said wireless UE device (1000), corresponding to said query, from said service integration node (108), said response including a list of service capability identifiers relating to one or more service features; and
presenting (308) at least a subset of services enabled by said list of service capability identifiers via a display for supporting user interaction at said wireless user equipment (UE) device (1000).

2. The method as recited in claim 1, wherein said service features comprise at least one enterprise service feature or at least one service feature supported by a wide area public communications network (104).

3. The method as recited in any of claims 1-2, wherein said query comprises one of a Short Message Service (SMS)-based message, an Unstructured Supplementary Service Data (USSD)-based message, and an Internet Protocol (IP)-based message or wherein said query is transmitted over one of a circuit-switched network (104) and a packet-switched network (104).

4. The method as recited in any of claims 1-3, preferably wherein said query includes a device identifier associated with said wireless UE device (1000), a subscription identifier, an access network identifier, and an identifier associated with said incoming call.

5. The method as recited in any of claims 1-4, wherein said service features comprises at least one telephony service feature, preferably wherein said at least one telephony service feature is selected from one of direct inward calling service, auto attendant service, call transfer service, customized abbreviated dialing service, voice mail service, follow-me service, call forwarding service, music on hold service, automatic ring back service, automatic call distribution service, call waiting service, call pickup service, conference service, call accounting service, voice paging service, customized greeting service, shared message box service, and automated directory service.

6. The method as recited in any of claims 1-5, wherein said query is addressed to said service integration node (108) using address information stored in at least one of a memory circuit integrated within said wireless UE device (1000) and a removable module operable with said wireless UE device (1000).

7. The method as recited in claim 6, wherein said removable module comprises one of a Universal Subscriber Identity Module (USIM), a Removable User Identity Module (RUIM), a Compact Flash module, and Secure Digital (SD) memory card, or wherein said address information comprises at least one of a Fully Qualified Domain Name (FQDN), an IP address, an E.164 number, and a Session Initiation Protocol (SIP) Uniform Resource Identifier (URI).

8. A wireless user equipment (UE) device (1000), comprising:
means (1002, 1004, 1030) for generating a query towards a service integration node (108) disposed in an Internet Protocol (IP) Multimedia Subsystem (IMS) core network having functionality to integrate service features from a plurality of service platforms, said query being in-call with respect to an incoming call from a calling party (110) and pertaining to available service features for the incoming call;
means (1002, 1004, 1030) for processing a response received from said service integration node (108), said response corresponding to said query and including a list of service capability identifiers relating to one or more service features; and
means (1002, 1022) for presenting at least a subset of services enabled by said list of service capability identifiers in order to facilitate user interaction with respect to said one or more service features.

9. The wireless UE device (1000) as recited in claim 8, wherein said service features comprise at least one enterprise service feature or at least one service feature supported by a wide area public communications network (104).

10. The wireless UE device (1000) as recited in any of claims 8-9, wherein said query comprises one of a Short Message Service (SMS)-based message, an Unstructured Supplementary Service Data (USSD)-based message, and an Internet Protocol (IP)-based message.

11. The wireless UE device (1000) as recited in any of claims 8-10, preferably wherein said query includes a device identifier associated with said wireless UE device (1000), a subscription identifier, an access network identifier, and an identifier associated with said incoming call.

12. The wireless UE device (1000) as recited in any of claims 8-11, wherein said service features comprises at least one telephony service feature, preferably wherein said at least one telephony service feature is selected from one of direct inward calling service, auto attendant service, call transfer service, customized abbreviated dialing service, voice mail service, follow-me service, call forwarding service, music on hold service, automatic ring back service, automatic call distribution service, call waiting service, call pickup service, conference service, call accounting service, voice paging service, customized greeting service, shared message box service, and automated directory service.

13. The wireless UE device (1000) as recited in any of claims 8-12, further comprising means (1002, 1004) for transmitting said query over one of a circuit-switched network (104) and a packet-switched network (104).

14. The wireless UE device (1000) as recited in any of claims 8-13, further comprising means (1034, 1035) for storing address information relating to said service integration node 108).

15. The wireless UE device (1000) as recited in claim 14, wherein said means (1034, 1035) for storing comprises a removable module selected from one of a Universal Subscriber Identity Module (USIM), a Removable User Identity Module (RUIM), a Compact Flash module, and Secure Digital (SD) memory card or wherein said address information comprises at least one of a Fully Qualified Domain Name (FQDN), an IP address, an E.164 number, and a Session Initiation Protocol (SIP) Uniform Resource Identifier (URI).

## Patentansprüche

1. Ein Verfahren zum Erleichtern eines Erfassens von Dienstfähigkeiten, die in einer Netzwerk-Umgebung (100) verfügbar sind, das aufweist:
an einer drahtlosen Benutzereinrichtungs(UE - user equipment)-Vorrichtung (1000), Erzeugen einer Abfrage (304) an einen Dienstintegrationsknoten (108), der in einem Internetprotokoll(IP- Internet Protocol)-Multimedia-Teilsystem(IMS - IP Multimedia Subsystem)-Kernnetzwerk angeordnet ist und eine Funktionalität hat, um Dienstmerkmale von einer Vielzahl von Dienstplattformen zu integrieren, wobei die Abfrage innerhalb eines Anrufs (in-call) ist in Bezug auf einen eingehenden Anruf von einem anrufenden Teilnehmer (110) und verfügbare Dienstmerkmale für den eingehenden Anruf betrifft;
Empfangen einer Antwort (306) an der drahtlosen UE-Vorrichtung (1000) entsprechend der Abfrage von dem Dienstintegrationsknoten (108), wobei die Antwort eine Liste von Dienstfähigkeitsidentifizierern umfasst, die ein oder mehrere Dienstmerkmal(e) betreffen; und
Präsentieren (308) zumindest eines Teilsatzes von Diensten, die durch die Liste von Dienstfähigkeitsidentifizierern möglich sind, über eine Anzeige zur Unterstützung einer Benutzerinteraktion an der drahtlosen Benutzereinrichtungs(UE)-Vorrichtung (1000).

2. Das Verfahren gemäß Anspruch 1, wobei die Dienstmerkmale zumindest ein Unternehmensdienstmerkmal oder zumindest ein Dienstmerkmal aufweisen, das von einem öffentlichen Weitbereichskommunikationsnetzwerk (104) unterstützt wird.

3. Das Verfahren gemäß einem der Ansprüche 1-2, wobei die Abfrage eines aus einer SMS(Short Message Service)-basierten Nachricht, einer USSD(Unstructured Supplementary Service Data)-basierten Nachricht, und einer Internetprotokoll(IP - Internet Protocol)-basierten Nachricht aufweist oder wobei die Abfrage über eines aus einem leitungsvermittelten Netzwerk (104) und einem paketvermittelten Netzwerk (104) übertragen wird.

4. Das Verfahren gemäß einem der Ansprüche 1-3, wobei vorzugsweise die Abfrage einen Vorrichtungsidentifizierer, der mit der drahtlosen UE-Vorrichtung (1000) assoziiert ist, einen Teilnehmer-Identifizierer, einen Zugangsnetzwerk-Identifizierer und einen Identifizierer umfasst, der mit dem ankommenden Anruf assoziiert ist.

5. Das Verfahren gemäß einem der Ansprüche 1-4, wobei die Dienstmerkmale zumindest ein Telefondienstmerkmal aufweisen, wobei vorzugsweise das zumindest eine Telefondienstmerkmal ausgewählt ist aus einem aus einem Durchwahl-Dienst, einem "automatische Vermittlung"-Dienst, einem Anrufübertragungs-Dienst, einem kundenspezifischen Kurzwahl-Dienst, einem Sprachnachrichten-Dienst, einem "Follow-me"-Dienst, einem Anrufweiterleitungs-Dienst, einem Wartemusik-Dienst, einem "automatischer Rückruf"-Dienst, einem "automatische Anrufverteilung"-Dienst, einem Anklopfen-Dienst, einem Anrufübernahme-Dienst, einem Konferenzdienst, einem Anrufabrechnungsdienst, einem Sprach-Page-Dienst, einem kundenspezifischen Begrüßungs-Dienst, einem "gemeinsame Nachrichtenbox"-Dienst und einem "automatisches Verzeichnis"-Dienst.

6. Das Verfahren gemäß einem der Ansprüche 1-5, wobei die Abfrage an den Dienstintegrationsknoten (108) unter Verwendung von Adressinformation adressiert ist, die in zumindest einer aus einer Speicherschaltung, die in der drahtlosen UE-Vorrichtung (1000) integriert ist, und einem entfernbaren Modul gespeichert ist, das mit der drahtlosen UE-Vorrichtung (1000) betriebsfähig ist.

7. Das Verfahren gemäß Anspruch 6, wobei das entfernbare Modul eines aufweist aus einem USIM (Universal Subscriber Identity Module), einem RUIM (Removable User Identity Module), einem Compact-Flash-Modul, und einer SD(Secure Digital)-Speicherkarte, oder wobei die Adressinformation zumindest eines aus einem FQDN (Fully Qualified Domain Name), einer IP-Adresse, einer E.164-Nummer, und einem SIP(Session Initiation Protocol)-URI(Uniform Resource Identifier) aufweist.

8. Eine drahtlose Benutzereinrichtungs(UE - user equipment)-Vorrichtung (1000), die aufweist:
Mittel (1002, 1004, 1030) zum Erzeugen einer Abfrage an einen Dienstintegrationsknoten (108), der in einem Internetprotokoll(IP - Internet Protocol)-Multimedia-Teilsystem(IMS - IP Multimedia Subsystem)-Kernnetzwerk angeordnet ist und eine Funktionalität hat, um Dienstmerkmale von einer Vielzahl von Dienstplattformen zu integrieren,
wobei die Abfrage innerhalb eines Anrufs (in-call) ist in Bezug auf einen eingehenden Anruf von einem anrufenden Teilnehmer (110) und verfügbare Dienstmerkmale für den eingehenden Anruf betrifft;
Mittel (1002, 1004, 1030) zum Verarbeiten einer Antwort, die von dem Dienstintegrationsknoten (108) empfangen wird, wobei die Antwort der Abfrage entspricht und eine Liste von Dienstfähigkeitsidentifizierern umfasst, die ein oder mehrere Dienstmerkmal(e) betreffen; und
Mittel (1002, 1022) zum Präsentieren zumindest eines Teilsatzes von Diensten, die durch die Liste von Dienstfähigkeitsidentifizierern möglich sind, zur Unterstützung einer Benutzerinteraktion hinsichtlich des einen Dienstmerkmals oder der mehreren Dienstmerkmale.

9. Die drahtlose UE-Vorrichtung (1000) gemäß Anspruch 8, wobei die Dienstmerkmale zumindest ein Unternehmensdienstmerkmal oder zumindest ein Dienstmerkmal aufweisen, das von einem öffentlichen Weitbereichskommunikationsnetzwerk (104) unterstützt wird.

10. Die drahtlose UE-Vorrichtung (1000) gemäß einem der Ansprüche 8-9, wobei die Abfrage eines aus einer SMS(Short Message Service)-basierten Nachricht, einer USSD(Unstructured Supplementary Service Data)-basierten Nachricht, und einer Internetprotokoll(IP - Internet Protocol)-basierten Nachricht aufweist.

11. Die drahtlose UE-Vorrichtung (1000) gemäß einem der Ansprüche 8-10, wobei vorzugsweise die Abfrage einen Vorrichtungsidentifizierer, der mit der drahtlosen UE-Vorrichtung (1000) assoziiert ist, einen Teilnehmer-Identifizierer, einen Zugangsnetzwerk-Identifizierer und einen Identifizierer umfasst, der mit dem ankommenden Anruf assoziiert ist.

12. Die drahtlose UE-Vorrichtung (1000) gemäß einem der Ansprüche 8-11, wobei die Dienstmerkmale zumindest ein Telefondienstmerkmal aufweisen, wobei vorzugsweise das zumindest eine Telefondienstmerkmal ausgewählt ist aus einem aus einem Durchwahl-Dienst, einem "automatische Vermittlung"-Dienst, einem Anrufübertragungs-Dienst, einem kundenspezifischen Kurzwahl-Dienst, einem Sprachnachrichten-Dienst, einem "Follow-me"-Dienst, einem Anrufweiterleitungs-Dienst, einem Wartemusik-Dienst, einem "automatischer Rückruf"-Dienst, einem "automatische Anrufverteilung"-Dienst, einem Anklopfen-Dienst, einem Anrufübernahme-Dienst, einem Konferenzdienst, einem Anrufabrechnungsdienst, einem Sprach-Page-Dienst, einem kundenspezifischen Begrüßungs-Dienst, einem "gemeinsame Nachrichtenbox"-Dienst und einem "automatisches Verzeichnis"-Dienst.

13. Die drahtlose UE-Vorrichtung (1000) gemäß einem der Ansprüche 8-12, die weiter Mittel (1002, 1004) aufweist zum Übertragen der Abfrage über eines aus einem leitungsvermittelten Netzwerk (104) und einem paketvermittelten Netzwerk (104).

14. Die drahtlose UE-Vorrichtung (1000) gemäß einem der Ansprüche 8-13, die weiter Mittel (1034, 1035) aufweist zum Speichern von Adressinformation hinsichtlich des Dienstintegrationsknotens (108).

15. Die drahtlose UE-Vorrichtung (1000) gemäß Anspruch 14, wobei das Mittel (1034, 1035) zum Speichern ein entfernbares Modul aufweist, das aus einem USIM (Universal Subscriber Identity Module), einem RUIM (Removable User Identity Module), einem Compact-Flash-Modul, und einer SD(Secure Digital)-Speicherkarte ausgewählt ist, oder wobei die Adressinformation zumindest eines aus einem FQDN (Fully Qualified Domain Name), einer IP-Adresse, einer E.164-Nummer, und einem SIP(Session Initiation Protocol)-URI(Uniform Resource Identifier) aufweist.

## Revendications

1. Procédé destiné à faciliter la découverte des capacités de services disponibles dans un environnement en réseau (100), comprenant les étapes consistant à :
sur un dispositif d'équipement d'utilisateur sans fil (1000), produire une demande (304) adressée à un noeud d'intégration de services (108) implanté dans un réseau central d'un sous-système multimédia au protocole internet (IMS, pour *« Internet Protocol Multimedia Subsystem »*) et possédant des fonctionnalités pour intégrer des fonctions de services provenant d'une pluralité de plates-formes de services, ladite demande étant interne à l'appel par rapport à un appel entrant provenant d'une partie appelante (110) et concernant des fonctions de services qui sont disponibles pour l'appel entrant ;
sur ledit dispositif d'équipement d'utilisateur sans fil (1000), recevoir une réponse (306) correspondant à ladite demande, en provenance dudit noeud d'intégration de services (108), ladite réponse comprenant une liste d'identificateurs de capacités de services intéressant une ou plusieurs fonctions des services ; et
présenter (308) sur un écran d'affichage au moins un sous-ensemble de services validé par ladite liste d'identificateurs de capacités de services, afin de supporter une interaction avec l'utilisateur sur ledit dispositif d'équipement d'utilisateur sans fil (1000).

2. Procédé selon la revendication 1, dans lequel lesdites fonctions de services comprennent au moins une fonction de service d'entreprise ou au moins une fonction de service supportée par un réseau public étendu de communication (104).

3. Procédé selon l'une quelconque des revendications 1 et 2, dans lequel ladite demande comprend soit un message du service de messages courts (SMS pour « *Short Message Service* »), soit un message de données supplémentaires de service non structurées (USSD pour « *Unstructured Supplementary Service Data* »), soit un message du protocole internet (IP pour « Internet *Protocol* »), ou dans lequel ladite demande est transmise soit sur un réseau à commutation de circuits (104), soit sur un réseau à commutation de paquets (104).

4. Procédé selon l'une quelconque des revendications 1 à 3, de préférence dans lequel ladite demande comprend un identificateur de dispositif associé audit dispositif d'équipement d'utilisateur sans fil (1000), un identificateur d'abonnement, un identificateur d'accès au réseau et un identificateur associé audit appel entrant.

5. Procédé selon l'une quelconque des revendications 1 à 4, dans lequel lesdites fonctions de services comprennent au moins une fonction de service de téléphonie, de préférence dans lequel ladite au moins une fonction de service de téléphonie est sélectionnée parmi les suivantes : service d'appel entrant direct, service de serveur vocal, service de transfert d'appel, service de numérotation abrégée individualisée, service de messagerie vocale, service de renvoi temporaire, service de transfert d'appel, service de mise en attente musicale, service de rappel automatique, service de distribution automatique des appels, service de mise en attente, service de prise d'appel, service de téléconférence, service de comptabilisation des appels, service de recherche vocale, service individualisé de bienvenue, service de messagerie partagée, et service d'annuaire automatique.

6. Procédé selon l'une quelconque des revendications 1 à 5, dans lequel ladite demande est adressée audit noeud d'intégration de services (108) en utilisant des informations d'adresse stockées dans au moins soit un circuit de mémoire intégré dans ledit dispositif d'équipement d'utilisateur sans fil (1000), soit un module amovible pouvant fonctionner avec ledit dispositif d'équipement d'utilisateur sans fil (1000).

7. Procédé selon la revendication 6, dans lequel ledit module amovible est constitué soit d'un module universel d'identité d'abonné (USIM, pour « *Universal Subscriber Identity Module* »), soit d'un module amovible d'identité d'utilisateur (RUIM, pour « *Removable User Identity Module* »), soit d'un module Compact Flash, soit d'une carte de mémoire Secure Digital (SD), ou dans lequel lesdites informations d'adresse comprennent au moins soit un nom de domaine entièrement qualifié (FQDN, pour « *Fully Qualified Domain Name* »), soit une adresse IP, soit un numéro E.164, soit un identificateur uniforme de ressource (URI, pour « *Uniform Resource Identifier* ») du protocole de lancement de session (SIP, pour « *Session Initiation Protocol* »).

8. Dispositif d'équipement d'utilisateur sans fil (1000), comprenant :
un moyen (1002, 1004, 1030) destiné à produire une demande adressée à un noeud d'intégration de services (108) implanté dans un réseau central d'un sous-système multimédia au protocole internet (IMS, pour « *Internet Protocol Multimedia Subsystem* ») et possédant des fonctionnalités pour intégrer des fonctions de services provenant d'une pluralité de plates-formes de services, ladite demande étant interne à l'appel par rapport à un appel entrant provenant d'une partie appelante (110) et concernant des fonctions de services qui sont disponibles pour l'appel entrant ;
un moyen (1002, 1004, 1030) destiné à traiter une réponse en provenance dudit noeud d'intégration de services (108), ladite réponse correspondant à ladite demande et comprenant une liste d'identificateurs de capacités de services intéressant une ou plusieurs fonctions des services ; et
un moyen (1002, 1022) destiné à présenter au moins un sous-ensemble de services validé par ladite liste d'identificateurs de capacités de services, afin de supporter une interaction avec l'utilisateur à propos desdites une ou plusieurs fonctions de services.

9. Dispositif d'équipement d'utilisateur sans fil (1000) selon la revendication 8, dans lequel lesdites fonctions de services comprennent au moins une fonction de service d'entreprise ou au moins une fonction de service supportée par un réseau public étendu de communication (104).

10. Dispositif d'équipement d'utilisateur sans fil (1000) selon l'une quelconque des revendications 8 et 9, dans lequel ladite demande comprend soit un message du service de messages courts (SMS pour « *Short Message Service* »), soit un message de données supplémentaires de service non structurées (USSD pour « *Unstructured Supplementary Service* Data »), soit un message du protocole internet (IP pour « *Internet Protocol* »).

11. Dispositif d'équipement d'utilisateur sans fil (1000) selon l'une quelconque des revendications 8 à 10, de préférence dans lequel ladite demande comprend un identificateur de dispositif associé audit dispositif d'équipement d'utilisateur sans fil (1000), un identificateur d'abonnement, un identificateur d'accès au réseau et un identificateur associé audit appel entrant.

12. Dispositif d'équipement d'utilisateur sans fil (1000) selon l'une quelconque des revendications 8 à 11, dans lequel lesdites fonctions de services comprennent au moins une fonction de service de téléphonie, de préférence dans lequel ladite au moins une fonction de service de téléphonie est sélectionnée parmi les suivantes : service d'appel entrant direct, service de serveur vocal, service de transfert d'appel, service de numérotation abrégée individualisée, service de messagerie vocale, service de renvoi temporaire, service de transfert d'appel, service de mise en attente musicale, service de rappel automatique, service de distribution automatique des appels, service de mise en attente, service de prise d'appel, service de téléconférence, service de comptabilisation des appels, service de recherche vocale, service individualisé de bienvenue, service de messagerie partagée et service d'annuaire automatique.

13. Dispositif d'équipement d'utilisateur sans fil (1000) selon l'une quelconque des revendications 8 à 12, comprenant en outre un moyen (1002, 1004) destiné à émettre ladite demande soit sur un réseau à commutation de circuits (104), soit sur un réseau à commutation de paquets (104).

14. Dispositif d'équipement d'utilisateur sans fil (1000) selon l'une quelconque des revendications 8 à 13, comprenant en outre un moyen (1034, 1035) destiné à stocker des informations d'adresse intéressant ledit noeud d'intégration de services (108).

15. Dispositif d'équipement d'utilisateur sans fil (1000) selon la revendication 14, dans lequel ledit moyen (1034, 1035) de stockage est constitué soit d'un module universel d'identité d'abonné (USIM, pour « *Universal Subscriber Identity Module* »), soit d'un module amovible d'identité d'utilisateur (RUIM, pour « *Removable User Identity Module* »), soit d'un module Compact Flash, soit d'une carte de mémoire Secure Digital (SD), ou dans lequel lesdites informations d'adresse comprennent au moins soit un nom de domaine entièrement qualifié (FQDN, pour « *Fully Qualified Domain Name* »), soit une adresse IP, soit un numéro E.164, soit un identificateur uniforme de ressource (URI, *pour* « *Uniform Resource Identifier* ») du protocole de lancement de session (SIP, pour « *Session Initiation Protocol* »).
